# EUROPEAN PATENT APPLICATION

(11) **EP 0 559 351 A1**
(43) Date of publication of application: **08.09.1993**
(21) Application number: 93301146.2
(22) Date of filing: 17.02.1993
(51) Int. Cl.: H04J 3/06, H04B 3/46, G01S 13/78

(54) **Systems for measuring the propagation delay of a two-way communications network**

(30) Priority: 04.03.1992 GB 9204682
(71) Applicant: MARCONI INSTRUMENTS LIMITED, St. Albans Hertfordshire, AL4 0JN (GB)
(72) Inventor: Hamilton, Alan James, Luton, Bedfordshire LU2 GHS (GB)
(74) Representative: McGowan, Nigel George

(57) **Abstract**

A system (57) for measuring the propagation delay of a two-way communications network (51, 53, 55) comprising: a first pseudo random binary sequence generator (59) for generating a first pseudo random binary sequence, a transmitter/receiver (53) of the network (51, 53, 55) transmitting the first sequence into the network (51, 53, 55), the network (51, 53, 55) returning the first sequence to-the transmitter/receiver (53); a second pseudo random binary sequence generator (61), the transmitter/receiver (53) supplying to the second generator (61) sufficient bits of the returned first sequence to enable thereafter the generation by the second generator (61) of a second pseudo random binary sequence which is the same as said first sequence; and means (63, 65, 67) for determining the phase delay between the generations of said first and second sequences, which phase delay is indicative of said propagation delay.

## Description

This invention relates to systems for measuring the propagation delay of a two-way communications network, i.e. the time it takes for a signal transmitted by a transmitter/receiver at one end of the network to travel to the other end of the network and return.

In use of one known system, a fixed bit pattern in which is inserted a unique delay measurement bit pattern is transmitted by the transmitter/receiver at the one end. The transmitter/receiver watches out for the return of the unique delay measurement bit pattern. The time between transmission and return is the propagation delay of the network.

Similarly, in use of another known system, a fixed bit pattern transmitted by the transmitter/receiver at the one end is corrupted by an error sequence. The time between transmission and return of the error sequence is the propagation delay of the network.

A problem with the above known systems is that they are liable to errors in the network which corrupt transmission. For example, in measuring the propagation delay of a satellite communications network fading in transmission may well disrupt propagation delay measurements.

It is an object of the present invention to provide a system for measuring the propagation delay of a two-way communications network wherein the above problem is alleviated.

According to the present invention there is provided a system for measuring the propagation delay of a two-way communications network comprising: a first pseudo random binary sequence generator for generating a first pseudo random binary sequence, a transmitter/receiver of the network transmitting the first sequence into the network, the network returning the first sequence to the transmitter/receiver; a second pseudo random binary sequence generator, the transmitter/receiver supplying to the second generator sufficient bits of the returned first sequence to enable thereafter the generation by the second generator of a second pseudo random binary sequence which is the same as said first sequence; and means for determining the phase delay between the generations of said first and second sequences, which phase delay is indicative of said propagation delay.

A system in accordance with the present invention will now be described, by way of example, with reference to the accompanying drawings, in which:-
Figure 1 is a block schematic diagram showing the system and a two-way communications network, the propagation delay of which is to be measured by the system; and
Figure 2 is a block schematic diagram showing detail of the system.

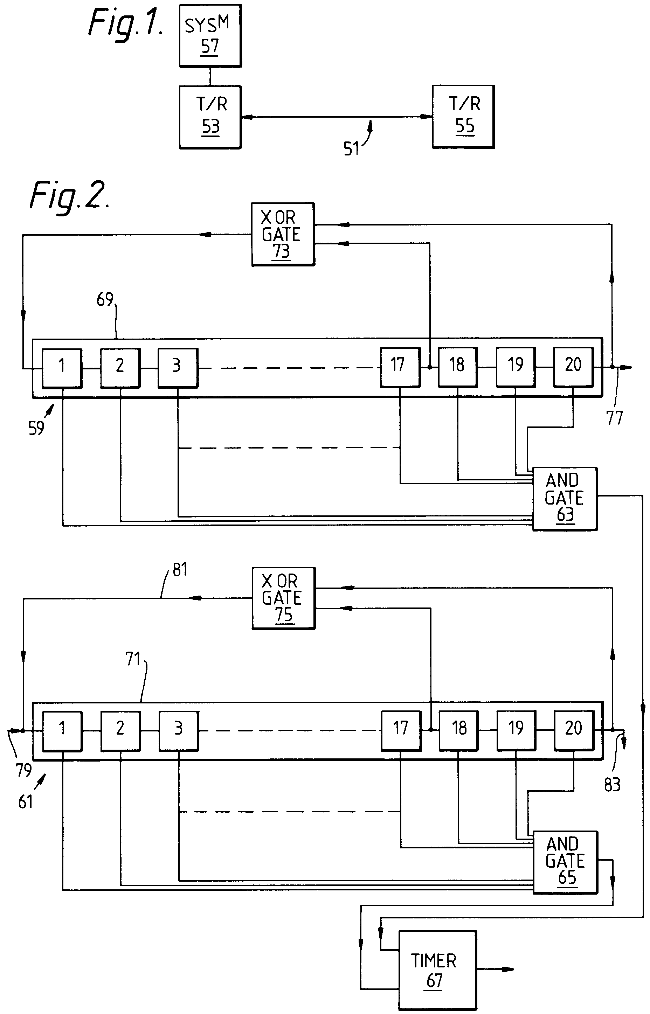

Referring to Figure 1, the two-way communications network 51 comprises at one end thereof a first transmitter/receiver 53 and at the other end thereof a second transmitter/receiver 55. The measuring system 57 is located at transmitter/receiver 53.

Referring also to Figure 2, the system 57 comprises transmit and receive pseudo random binary sequence (PRBS) generators 59, 61, AND gates 63, 65 and a timer 67. In use of the system 57, see below, it is required that each PRBS generator 59, 61 generate a PRBS which has a repeating length of 2²⁰ - 1, i.e. 1,048,575, bits. To this end each generator 59, 61 comprises a twenty stage shift register 69, 71 and an EXCLUSIVE-OR gate 73, 75 connected as shown in Figure 2. The twenty stages of each shift register 69, 71 are denoted in Figure 2 by references 1 to 20 respectively.

In use of the system 57 to measure the propagation delay of the two-way communications network 51, transmitter/receiver 55 is instructed to return to transmitter/receiver 53 signals transmitted by transmitter/receiver 53. The transmit PRBS generator 59, clocked by the network clock, outputs at 77 to transmitter/receiver 53 a 2²⁰ - 1 PRBS. Transmitter/receiver 53 transmits the PRBS into network 51 and as instructed transmitter/receiver 55 returns the PRBS to transmitter/receiver 53.

Twenty successively occurring bits of the returned PRBS are passed by transmitter/receiver 53 to receive PRBS generator 61 to enable thereafter generator 61 itself to generate the same PRBS. Twenty successively occurring bits are required since the PRBS is a 2²⁰ - 1 PRBS. If the PRBS were, for example, a 2²⁵ - 1 PRBS then, of course, twenty five successively occurring bits would be required. The bits of the returned PRBS are shifted into stages 1 - 20 of shift register 71 of generator 61 from input 79 to generator 61. Whilst such shifting is taking place the connection 81 of the output of EXCLUSIVE-OR gate 75 to stage 1 of shift register 71 is disabled. Once twenty bits of the returned PRBS have passed to generator 61 no more bits are allowed to pass, i.e. input 79 is disabled, and connection 81 is re-enabled. Provided the bits passed to generator 61 have not been corrupted in transit in network 51, receive generator 61, clocked by the network clock, will itself generate the same PRBS as transmit generator 59, i.e. receive generator 61 will have locked-on to the PRBS of transmit generator 59 and will itself be generating the same PRBS. Successful locking-on of generator 61 is checked by comparing in an EXCLUSIVE-OR gate (not shown) the returned PRBS received by transmitter/receiver 53 with the sequence provided by 'locked-on' generator 61 at output 83 of generator 61. If lock was not achieved further attempts are made until it is.

After lock there will be a phase delay between the generations of the PRBSs by transmit and receive generators 59, 61 which is determined by the time taken for the PRBS transmitted by transmitter/receiver 53 to return thereto. Thus, the phase delay is a measure of the propagation delay of network 51.

The phase delay is measured by means of AND gates 63, 65 and timer 67. An output will be provided by each AND gate 63, 65 when the contents of each of the stages 1 - 20 of its respective shift register 69, 71 is one. Since in the repeating length of the 2²⁰ - 1 PRBS generated by generator 59 twenty successive ones only occurs once, each AND gate 63, 65 will only provide an output once in each repetition of the PRBS generated by its respective generator 59, 61. The phase delay equals the time from an output by AND gate 63 to the next output by AND gate 65. This time is measured by timer 67 which counts the number of network clocks from an output by AND gate 63 to an output by AND gate 65.

It is to be noted that all that is required for a measurement of propagation delay by the system 57 is that receive PRBS generator 61 capture an uncorrupted sequence of twenty successively occurring bits of the transmitted PRBS. Once generator 61 has locked-on to the PRBS it itself generates the PRBS without requiring receipt of further bits of the PRBS. In view of the continuing transmission of the PRBS it is highly likely that the uncorrupted sequence necessary for locking-on will be received, if not initially then soon thereafter.

The maximum propagation delay that can be measured by the system is determined by the length of time it takes the network being measured to transmit and return the repeating length of the PRBS. The system can only measure propagation delays less than the length of time it takes the network to transmit and return the repeating length. For example, for a network clocking at 2,048,000 bits/second, the maximum propagation delay that can be measured is 2²⁰ - 1/ 2,048,000 equals 0.5 seconds.

One way in which longer propagation delays can be measured is, of course, if there is sufficient flexibility to allow such, to increase the repeating length of the PRBS. Another way would be to, after generation by generator 59, pad out the PRBS with fill bits, an equal number of fill bits between the bits of each succesive pair of bits of the PRBS, until the length of time it takes to transmit the padded out PRBS exceeds the propagation delay to be measured. In the latter way, the fill bits would be removed after receipt of the returned padded out PRBS and before the sequence is shifted into generator 61. The padding out is taken into account by the timer 67 when providing the delay measurement. In the former way, the number of stages of the shift registers of the transmit and receive PRBS generators would be increased as required. For example, if a 2²⁵ - 1 PRBS were required, the number of shift registers would be increased to 25.

It is to be appreciated that although in the system described above by way of example the network clock clocks the transmit and receive PRBS generators 59, 61, and timer 67 counts network clocks, the network clock need not be used for these purposes, a clock independent of the network clock could be used.

It is also to be appreciated that although in the system described above by way of example the occurrence of twenty successive ones is used to signal one repetition of the PRBSs, any sequence unique to the repeating length of the PRBS could be used, for example nineteen consecutive zeros.

## Claims

1. A system (57) for measuring the propagation delay of a two-way communications network (51, 53, 55) comprising: a first pseudo random binary sequence generator (59) for generating a first pseudo random binary sequence, a transmitter/receiver (53) of the network (51, 53, 55) transmitting the first sequence into the network (51, 53, 55), the network (51, 53, 55) returning the first sequence to the transmitter/receiver (53); a second pseudo random binary sequence generator (61), the transmitter/receiver (53) supplying to the second generator (61) sufficient bits of the returned first sequence to enable thereafter the generation by the second generator (61) of a second pseudo random binary sequence which is the same as said first sequence; and means (63, 65, 67) for determining the phase delay between the generations of said first and second sequences, which phase delay is indicative of said propagation delay.

2. A system according to Claim 1 wherein said means (63, 65, 67) for determining determines the phase delay by: monitoring the generation of each of said first and second sequences for the occurrence of a section of the repeating length of the sequence unique to the repeating length, each sequence being monitored for the occurrence of the same said section; and providing an output representative of the time between the occurrence of said section in the first sequence and the next occurrence of said section in the second sequence.

3. A system according to Claim 1 or Claim 2 wherein: each of said first and second sequences has a repeating length of 2²⁰ - 1 bits; and each of said first (59) and second (61) generators comprises a twenty stage shift register (69, 71) and an EXCLUSIVE-OR gate (73, 75), the output of the EXCLUSIVE-OR gate (73, 75) being connected to the input of the first stage of the shift register (69, 71), the output of stage twenty of the shift register (69, 71) being connected to one of the two inputs of the EXCLUSIVE-OR gate (73, 75), the other input of the EXCLUSIVE-OR gate (73, 75) being connected to the output of stage seventeen of the shift register (69, 71).

4. A system according to Claim 3 when dependent on Claim 2 wherein said section of the repeating length unique to the repeating length is twenty successively occurring ones, said means (63, 65,67) for determining comprising first (63) and second (65) AND gates and a timer (67), the first AND gate (63) having twenty inputs each one of which is connected to a respective one of the twenty stages of the shift register (69) of said first generator (59), the second AND gate (65) having twenty inputs each one of which is connected to a respective one of the twenty stages of the shift register (71) of said second generator (61), said timer (67) measuring the time between successive outputs from said AND gates (63, 65).

5. A system according to any one of the preceding claims further comprising means for checking that said second generator (61) is generating the same pseudo random binary sequence as said first generator (59) by comparing the pseudo random binary sequence generated by the second generator (61) with the pseudo random binary sequence returned to the transmitter/receiver (53) by the communications network (51, 53, 55).

6. A system according to any one of the preceding claims wherein after generation by the first generator (59) the first sequence is padded out with fill bits, an equal number of fill bits between the bits of each successive pair of bits of the first sequence, such that the length of time it takes the network (51, 53, 55) to transmit and return the padded out first sequence exceeds the propagation delay to be measured, on return of the padded out first sequence to the transmitter/receiver (53) the fill bits being removed prior to the supply of the returned sequence to the second generator (61).

7. A system according to any one of the preceding claims wherein said first (59) and second (61) pseudo random binary sequence generators are clocked by the network clock.

8. A system according to any one of claims 1 to 6 wherein said first (59) and second (61) pseudo random binary sequence generators are clocked by a clock independent of the network clock.
